# EUROPÄISCHE PATENTANMELDUNG

(11) **EP 4 644 808 A1**
(43) Veröffentlichungstag der Anmeldung: **05.11.2025**
(21) Anmeldenummer: 25172422.5
(22) Anmeldetag: 24.04.2025
(51) Int. Cl.: F25D 23/06

(54) **KÜHL- UND/ODER GEFRIERGERÄT**

(30) Priorität: 30.04.2024 DE 102024112121; 03.06.2024 DE 102024115346
(71) Anmelder: Liebherr-Hausgeräte Ochsenhausen GmbH, 88416 Ochsenhausen (DE)
(72) Erfinder: PROBST, Arnulf, 89281 Altenstadt (DE)
(74) Vertreter: Herrmann, Uwe

(57) **Zusammenfassung**

Die vorliegende Erfindung betrifft ein Kühl- und/oder Gefriergerät mit einem gekühlten Innenraum, der einen Nutzraum zur Lagerung von Kühl- und/oder Gefriergut aufweist, sowie mit einer in dem gekühlten Innenraum befindlichen Trennplatte, die derart angeordnet ist, dass die Trennplatte den Nutzraum von einem weiteren Bereich des gekühlten Innenraums abgrenzt, der keinen Nutzraum darstellt, wobei die Trennplatte teilweise oder vollständig durch ein extrudiertes oder koextrudiertes Element gebildet wird.

## Beschreibung

Die vorliegende Erfindung betrifft ein Kühl- und/oder Gefriergerät mit einem gekühlten Innenraum, der einen Nutzraum zur Lagerung von Kühl- und/oder Gefriergut aufweist, sowie mit einer in dem gekühlten Innenraum befindlichen Trennplatte, die derart angeordnet ist, dass die Trennplatte den Nutzraum von einem weiteren Bereich des gekühlten Innenraums abgrenzt, der vorzugsweise keinen Nutzraum darstellt.

Aus dem Stand der Technik ist es bekannt, in einem gekühlten Innenraum eines Kühl- und/oder Gefriergerätes eine vertikale Trennplatte vorzusehen, die beispielsweise als Abtrennung eines Luftkanals von dem Nutzraum dient.

Für jede Längen- bzw. Höhenvariante dieser vertikalen Trennplatte sind jeweils eigene Werkzeuge für die Herstellung der Trennplatte erforderlich, was mit entsprechend hohen Werkzeugkosten verbunden ist.

Der vorliegenden Erfindung liegt daher die Aufgabe zugrunde, ein Kühl- und/oder Gefriergerät der eingangs genannten Art dahingehend weiterzubilden, dass dessen Herstellung gegenüber bekannten Geräten vereinfacht und verbilligt wird.

Diese Aufgabe wird durch ein Kühl- und/oder Gefriergerät mit den Merkmalen des Anspruchs 1 gelöst.

Danach ist vorgesehen, dass die Trennplatte teilweise oder vollständig durch ein extrudiertes oder durch ein koextrudiertes Element gebildet wird. Anders als bei aus dem Stand der Technik bekannten Geräten wird somit ein Extrusionsprofil oder ein durch Koextrusion erhaltenes Element als Trennplatte verwendet.

Vorzugsweise handelt es sich dabei um eine im Extrusionsverfahren oder Koextrusionsverfahren hergestellte großflächige Abdeckung für den gekühlten Innenraum, die beispielsweise vor der Rückwand des Innenraums angebracht ist.

Von der Erfindung ist umfasst, dass die Trennplatte insgesamt aus dem genannten Extrusionsprofil oder Koextrusionsprofil besteht.

Von der Erfindung ist jedoch auch der Fall umfasst, dass die Trennplatte nur teilweise aus dem genannten Extrusionsprofil oder Koextrusionsprofil besteht. Denkbar ist es beispielsweise, dass die Trennplatte einen Grundkörper sowie ein oder mehrere weitere Elemente aufweist und nur der gesamte Grundkörper oder ein Teil von diesem als Extrusionsprofil oder Koextrusionsprofil ausgeführt ist.

In einer bevorzugten Ausgestaltung der Erfindung ist die Trennplatte vertikal angeordnet. Von der Erfindung sind jedoch auch andere Ausbildungen, wie beispielsweise geneigte bzw. schräge Ausführungen bzw. Anordnungen dieser Trennplatte umfasst.

In einer Ausgestaltung der Erfindung ist vorgesehen, dass der gekühlte Innenraum durch einen Innenbehälter und durch die Innenseite eines Verschlusselementes, insbesondere einer Tür, begrenzt wird, wobei der Innenbehälter eine Rückwand aufweist und wobei die Trennplatte der Rückwand vorgelagert ist.

Die Trennplatte kann an der Rückwand des Innenbehälters befestigt sein. Jedoch sind auch andere Befestigungsoptionen denkbar und von der Erfindung mitumfasst, wie beispielsweise die Fixierung an einem anderen Element als dem Innenbehälter.

Grundsätzlich ist es auch denkbar, dass die Trennplatte an einer anderen Wand als der Rückwand des Innenbehälters befestigt ist, wie beispielsweise an der Decke, dem Boden oder an einer der Seitenwände.

Der erfindungsgemäße weitere Bereich kann einen Luftkanal darstellen oder aufweisen. In diesem Fall dient die Trennplatte somit zur Abtrennung des Nutzraums von einem oder mehreren Luftkanälen, von denen eine Wanderung vorzugsweise durch die Trennplatte gebildet wird.

Weiterhin kann vorgesehen sein, dass das Gerät einen Kältemittelkreislauf aufweist, der einen Verdampfer umfasst, und dass der Verdampfer in dem weiteren Bereich angeordnet ist. So ist es beispielsweise denkbar, dass der Rückwand des gekühlten Innenraums vorgelagert einen Verdampfer angeordnet ist, der zur Kühlung des Innenraums dient. Diesem vorgelagert kann die Trennwand angeordnet sein, vorzugsweise als vertikale Trennwand. Sie dient in diesem Fall als Verdampferabdeckung.

Die Trennplatte erstreckt sich vorzugweise über die gesamte Breite und/oder Höhe der Rückwand oder sonstigen Wand des Innenbehälters. Von der Erfindung ist jedoch auch umfasst, dass sich die Trennplatte nicht über die gesamte Breite und/oder Höhe der Rückwand oder sonstigen Wand des Innenbehälters erstreckt.

Denkbar ist es auch, dass beide Optionen, d. h. die Ausführung als Luftkanal und auch die Ausführung als Aufnahmebereich für den Verdampfer miteinander kombiniert sind. So ist es möglich, den weiteren Bereich sowohl als Verdampfermontagebereich als auch als Luftkanal vorzusehen. In diesem Fall kann die durch den Verdampfer gekühlte Luft beispielsweise durch den oder die Luftkanäle bzw. durch Öffnungen in den gekühlten Innenraum eintreten.

Weiterhin ist es denkbar, dass das Gerät einen in dem weiteren Bereich angeordneten Ventilator aufweist. In dem weiteren Bereich kann somit auch einen Ventilator angeordnet sein, der beispielsweise die Aufgabe hat, Luft über den Verdampfer bzw. durch den Luftkanal zu führen. Die durch den Verdampfer gekühlte Luft wird sodann an geeigneter Stelle, z.B. durch Öffnungen in der Trennplatte in den gekühlten Innenraum eingeführt.

In einer weiteren Ausgestaltung der Erfindung ist vorgesehen, dass an der Trennplatte ein oder mehrere Befestigungselemente angeordnet sind. Diese Befestigungselemente können dazu dienen, die Trennplatte selbst zu befestigen.

Sie können aber auch dazu dienen, weitere Elemente, wie z.B. Schienen oder sonstige Tragelemente für Ablageböden etc. an der Trennplatte zu montieren.

Denkbar ist es, dass die Befestigungselemente einteilig mit der Trennplatte extrudierte Elemente sind oder dass die Befestigungselemente durch eine Verbindungstechnik, insbesondere durch Schweißen, wie z.B. Vibrationsschweißen oder Ultraschallschweißen, oder Kleben mit der Trennplatte verbunden sind, d.h. nach dem Extrudieren oder Koextrudieren der Trennplatte mit dieser verbunden werden.

Im ersten Fall werden die Befestigungselemente somit gleich mit extrudiert bzw. koextrudiert, wodurch sich der Herstellervorgang entsprechend vereinfacht.

Sind die Befestigungselemente nicht einteilig mit der Trennplatte ausgeführt, d.h. werden diese als separate Elemente hergestellt, kann deren Herstellung vorzugsweise auch durch ein Extrusionsprozess oder Koextrusionsprozess oder auch anderweitig erfolgen.

Die Verbindung der Befestigungselemente mit der Trennplatte kann per Kraft- oder Formschluss, z.B. durch Verrasten, oder auch per Formschluss, z.B. durch Verkleben, z.B. mit doppelseitigem Klebeband erfolgen.

Denkbar ist es auch, dass als einfachste Ausgangsbasis eine extrudierte oder koextrudierte Platte verwendet wird, die nach dem Extrusionsvorgang bzw. Koextrusionsvorgang mit Befestigungselementen ausgestattet wird und dann in dem gekühlten Innenraum bzw. in dem Gehäuse montiert wird. Diese Befestigungselemente können beispielsweise durch Kleben, Schweißen etc. angebracht werden.

Werden die Befestigungselemente separat zu der Trennplatte gefertigt, können diese örtlich flexibel an dieser angeordnet werden, z.B. mittig an der Platte, um deren Stabilität zu erhöhen. Auch eine Anordnung im Bereich der vertikalen Seitenkanten der Platte ist denkbar.

Des Weiteren kann vorgesehen sein, dass die Trennplatte mit einem Oberflächenelement oder mit einer sonstigen Beschichtung versehen ist, das/die mit der Trennplatte koextrudiert ist oder als anderweitig mit der Trennplatte verbundenes Element vorliegt.

In einer weiteren Ausgestaltung der Erfindung weist das Oberflächenelement eine Oberflächenstruktur auf, vorzugsweise eine Oberflächenstruktur in Form eines Schliffbildes.

So kann in einem vorzugsweise letzten Schritt in dem Extrusionsverfahren oder Koextrusionsverfahren eine Oberflächenstruktur aufgeprägt werden, bevorzugt in einem fortlaufenden Verfahren (strukturierte Rolle, Walze, Bürste, ...).

So kann z.B. ein Schliffbild aufgebracht werden, das geschliffenem Edelstahl ähnelt oder es kann eine Faserstruktur aufgebracht werden, die einer Holzmaserung ähnelt.

Die Oberflächenstruktur kann auch Einfluss auf den Glanzgrad haben (hochglänzend - matt).

Es kann auch eine weitere, bevorzugt transparente Schicht im Koextrusionsverfahren aufgebracht werden, auf die die Oberflächenstruktur aufgeprägt wird.

Als weitere Variante der Erfindung kann eine Folie, die die Struktur bereits aufweist, auf die (ko-)extrudierte Platte auflaminiert oder anderweitig fixiert werden.

In einer weiteren bevorzugten Ausgestaltung der Erfindung ist vorgesehen, dass die Trennplatte einen oder mehrere Farbstoffe und/oder Partikel, insbesondere Metallpartikel oder ein metallisches Erscheinungsbild erzeugende Partikel und/oder organische Partikel und/oder Holz imitierende Partikel aufweist.

Somit können einer oder mehrere oder alle Teile der so erfindungsgemäßen Trennplatte Farbstoffe, Metallpartikel oder sonstige Partikel enthalten. Beispielsweise kann eine evtl. vorhandene, vorzugsweise nicht sichtbare Basisschicht z.B. grau eingefärbt sein, die sichtbare Schicht kann z.B. grau eingefärbt oder transparent bzw. transluzent sein und/oder zusätzlich Metallpartikel oder sonstige Partikel enthalten, die ein metallisches Erscheinungsbild erzeugen (ähnlich wie Partikel im Metallic-Lack).

Zu vergleichsweise geringen Kosten kann so eine ansprechende Optik erzielt werden.

Die Trennplatte kann aus einem Kunststoffmaterial bestehen oder ein solches aufweisen, vorzugsweise ist diese als Polystyrolplatine ausgeführt, und durch Beimischung von Metallflitter oder sonstigen Partikeln eine metallähnliche Optik aufweisen.

Zum Erreichen einer metallischen Optik muss somit nicht zwingend eine Metallfolie aufgebracht werden. Denkbar ist auch die Beimischung von metallischen Partikeln oder von einen metallischen Eindruck vermittelnden Partikeln im Rahmen des Extrusions- oder Koextrusionsprozesses. Dies gilt für andere optische Varianten, wie z.B. für eine Holz-, Stein-, Mamoroberfläche bzw. so wirkende Oberflächen entsprechend.

Beispielsweise können als Partikel organische Fasern verwendet werden, um beispielsweise Holzwerkstoffe zu imitieren.

Bei dem gekannten Oberflächenelement kann es sich auch um eine Folie oder eine Lackierung oder um eine gerade oder um eine gekrümmte Platte handeln.

Denkbar ist die Verwendung einer Folie in Form eines auf z.B. 0,2mm gewalzten Alu-(oder sonstigen Metall-) Coils ggf. mit Schliffstruktur und ggf. Lackbeschichtung auf der Sichtseite.

Die Klebeflächen der Folie (Rückseite) und ebenso ist die Platinen Oberfläche (Vorderseite) sind vorzugsweise glatt.

Zum Verkleben wird ein Sprühkleber, flächig, auf die Platine aufgebracht und die Folie mit einer Walze angedrückt.

Auch ist es denkbar, dass auf der Rückseite der Folie eine Klebebeschichtung aufgebracht ist, die z.B. über eine beheizte Rolle aktiviert wird und mit der Platine verklebt wird.

Dieses Oberflächenelement bzw. die Beschichtung kann ausschließlich optische Aufgaben erfüllen, d. h. zu einem besonders ansprechenden optischen Erscheinungsbild führen. Denkbar ist es auch, dass alternativ oder zusätzlich dazu weitere Funktionen erfüllt werden, wie beispielsweise eine Wärmeisolation, die Funktion als Strahlungsschirm etc.

Bei dem Oberflächenelement bzw. der Beschichtung kann es sich beispielsweise um eine Folie oder um eine gerade oder um eine gekrümmte Platte handeln.

Denkbar ist es somit beispielsweise, dass das Extrusionsprofil bzw. Koextrusionsprofil einen Grundkörper bildet, der von einem oder mehreren Beschichtungen und/oder Oberflächenelementen überdeckt wird. Diese können aus einer Folie bestehen oder eine Folie aufweisen oder auch aus einer Platte etc.

Dabei ist vorzugsweise vorgesehen, dass die Folie oder Platte der Kontur der Trennplatte wenigstens auf der zum Nutzer gewandten Seite der Trennplatte folgt. Ist die Trennplatte auf ihrer zum Nutzer gewandten Vorderseite eben, gilt dies in diesem Fall vorzugsweise auch für die Folie oder Platte. Ist die Trennplatte beispielsweise auf der zum Nutzer gewandten Seite gekrümmt, kann diese Kontur auch die Folie bzw. Platte aufweisen, d.h. ebenfalls gekrümmt sein.

Bei dem Oberflächenelement kann es sich um ein Element handeln, das aus Metall besteht oder Metall aufweist. In Betracht kommt somit beispielsweise eine Edelstahlplatte oder -folie, die auf der zum Nutzraum gewandten Seite der Trennplatte angeordnet ist.

Grundsätzlich ist es denkbar, dass das Oberflächenelement unmittelbar auf einem Grundkörper der Trennplatte, der als Extrusionsprofil oder als Koextrusionsprofil ausgebildet ist, aufgebracht ist. Von der Erfindung ist jedoch auch der Fall umfasst, dass sich zwischen dem Oberflächenelement und einem Grundkörper der Trennplatte, der als Extrusionsprofil oder als Koextrusionsprofil ausgebildet ist, ein oder mehrere weitere Schichten bzw. Lagen von Materialien, wie beispielsweise ein Wärmeisolationsmaterial etc. befinden.

Auch ist es von der Erfindung umfasst, dass die extrudierte Trennplatte nach dem Extrusionsprozess oder Koextrusionsprozess in keiner Weise nachbehandelt und vorzugsweise mit keiner Folie oder sonstigen Beschichtung versehen ist. Sie kann somit in dem Zustand verbaut sein, in dem sie aus dem Extruder kommt, z.B. mit einer matten oder auch glänzenden Oberfläche.

Wie oben näher erläutert, können sich an der Trennplatte ein oder mehrere Befestigungselemente befinden. Diese können als mit der Trennplatte extrudierte bzw. koextrudierte Elemente oder als anderweitig an der Trennplatte fixierte Teile angeordnet sein.

In einer weiteren Ausgestaltung der Erfindung ist vorgesehen, dass die Befestigungselemente als Rastelemente oder als Widerhaken ausgebildet sind und/oder dass die Befestigungselemente an der zu dem weiteren Bereich gerichteten Seite, d.h. an der vom Nutzraum abgewandten Seite der Trennplatte angeordnet sind.

Die Rastelemente oder sonstigen Befestigungselemente dienen vorzugsweise dazu, die Trennplatte möglichst werkzeugfrei und einfach sowie lösbar in dem gekühlten Innenraum zu befestigen.

Vorzugsweise ist vorgesehen, dass die Befestigungselemente als formschlüssig wirkende Befestigungselemente ausgebildet sind.

Von der Erfindung ist jedoch auch jede andere Art der Befestigung der Trennplatte umfasst, wie beispielsweise eine Verschraubung, ein Verklemmen, ein Verkleben etc.

Die Trennplatte kann ein- oder mehrteilig ausgeführt sein.

Im Falle der mehrteiligen Ausführung können Verbindungsmittel vorhanden sein, die die mehreren Teile der Trennplatte miteinander verbinden, wobei die Verbindungsmittel vorzugsweise auf der zu dem weiteren Bereich gewandten Seite der Trennplatte und damit für den Nutzer nicht sichtbar angeordnet sind.

Diese Verbindungsmittel dienen in einer bevorzugten Ausführung auch gleichzeitig als erfindungsgemäße Befestigungsmittel.

Denkbar ist es, dass die Trennplatte teilweise oder vollständig durch Tiefziehen des extrudierten oder koextrudierten Elementes weitergebildet ist. In diesem Fall erfolgt nach der Extrusion bzw. nach der Koextrusion der Trennplatte ein Tiefziehprozess, wodurch eine bestimmte gewünschte Konturierung der Trennplatte erzielt werden kann. Der oder die tiefgezogenen Bereiche können beispielsweise als Befestigungsbereiche oder Aufnahmebereiche dienen, z.B. für ein funktionales Element, wie z.B. einen Ventilator.

Denkbar ist es, dass die Trennplatte, das Isolationselement und ggf. ein oder mehrere funktionale Elemente, wie z.B. ein Ventilator, eine Luftklappe etc. eine gemeinsame Baugruppe bilden. Diese wird dann als solche in das Gerät eingesetzt, was den Herstellprozess entsprechend vereinfacht.

Vorzugsweise ist die Trennplatte lösbar angeordnet, sodass sie im Bedarfsfall leicht entnommen werden kann. Dies kann zum Beispiel erforderlich sein, um ein hinter der Trennplatte befindliches Element, wie beispielsweise einen Ventilator oder einen Verdampfer zugänglich zu machen.

Vorzugsweise ist vorgesehen, dass die Befestigungselemente eine formschlüssige, kraftschlüssige oder stoffschlüssige (z.B. Kleben) oder sonstige Verbindung mit dem den gekühlten Innenraum begrenzenden Innenbehälter und/oder darin angeordneten Elementen ausbilden.

Weiterhin ist es denkbar, dass sich in dem weiteren Bereich ein Isolationselement befindet und dass die Befestigungselemente eine formschlüssige oder sonstige Verbindung mit dem Isolationselement ausbilden.

Die vorliegende Erfindung betrifft des Weiteren ein Verfahren zur Herstellung eines Kühl- und/oder Gefriergerätes gemäß der Erfindung, wobei die Trennplatte extrudiert oder koextrudiert wird. Vorzugsweise ist vorgesehen, dass das Extrusionsprofil bzw. Koextrusionsprofil abgelängt wird, wenn die gewünschte Länge bzw. Höhe der Trennplatte erreicht ist.

In einer Ausgestaltung des Verfahrens ist vorgesehen, dass die Trennplatte nach dem Extrusions- bzw. Koextrusionsprozess bereichsweise oder insgesamt einem Tiefziehprozess unterzogen wird. Dies hat den Vorteil, dass eine gewünschte Konturierung der Trennplatte erzielt werden kann. Damit kann beispielsweise eine Aufnahme oder Halterung für ein funktionales Element, wie z.B. einen Ventilator, Beleuchtungsmittel, Luftklappen etc. geschaffen werden.

Weiterhin kann vorgesehen sein, dass die Trennplatte nach dem Extrusions- oder Koextrusionsprozess einem Prägeprozess unterzogen wird, mit dem eine Oberflächenstruktur eingeprägt wird. Diese Oberflächenstruktur ist vorzugsweise dreidimensional. Sie kann sich auf der zum Nutzer gewandten Seite oder auf der davon abgewandten Rückseite der Trennplatte befinden.

Eine besonders einfacher und kostengünstiger Herstellvorgang ergibt sich, wenn die Trennplatte, das Isolationselement und ggf. ein oder mehrere funktionale Elemente, wie Ventilator, Beleuchtungsmittel, Luftklappen, Luftkanäle als eine gemeinsame Baugruppe in dem Gerät verbaut werden.

Dies ist ein erheblicher Vorteil gegenüber aus dem Stand der Technik bekannten Ausführungsformen, bei denen für jede Dimension eines gekühlten Innenraums bzw. Länge bzw. Höhe und Breite der Trennplatte ein eigenes Werkzeug hergestellt werden muss.

Erfindungsgemäß ist dies nicht mehr notwendig. Vielmehr können mit ein und derselben Extrusions- bzw. Koextrusionsvorrichtung Trennplatten unterschiedlicher Breite und Länge, d. h. im eingebauten Zustand unterschiedlicher Breite und Höhe hergestellt werden. Denkbar ist somit auch, dass unterschiedliche Breiten der Trennplatte mit ein und derselben Extrusions- bzw. Koextrusionsvorrichtung hergestellt werden können.

Weitere Vorteile bevorzugte Ausgestaltungen der vorliegenden Erfindung werden nachstehend beschrieben:
Vorzugsweise dient die Trennplatte als vertikale Trennplatte, die der Rückwand des gekühlten Innenraums bzw. eines Innenbehälters vorgelagert ist.

Die Trennplatte ist vorzugsweise eine im Extrusions- oder Koextrusionsverfahren hergestellte großflächige Abdeckung für den Innenraum, die vorzugsweise an oder vor der Rückwand angebracht wird.

Sie ermöglicht das einfache Aufbringen von verschiedenen Oberflächen im Inlineprozess der Extrusion oder Koextrusion, wie beispielsweise Metallapplikationen.

Als einfache Ausführungsform kann eine extrudierte oder koextrudierte Platte verwendet werden, die zum Beispiel mit Befestigungselementen ausgestattet wird und dann in dem gekühlten Innenraum montiert wird.

Vorzugsweise befinden sich diese Befestigungselemente auf der Rückseite der Trennplatte, d. h. auf der Seite der Trennplatte, zu dem weiteren Bereich zugewandt und von dem Nutzraum abgewandt ist. Befinden sich die Befestigungselemente an der Rückseite der Trennplatte, kann eine homogene bzw. gleichmäßige und optisch ansprechende Oberfläche bzw. Sichtfläche der Trennplatte erzielt werden.

Bei der Fertigung des Bauteils bzw. der Trennplatte als Extrusions- oder Koextrusionsprofil können benötigte Befestigungselemente gleich mit extrudiert bzw. koextrudiert werden. Somit kann das Bauteil, d. h. die Trennplatte mit Befestigungselemente nach dem Ablängen des Profils ohne Zusatzaufwand verbaut werden.

Bei der Kunststoffextrusion bzw. - koextrusion ist es möglich, durch die Zugabe von Farbbatch die gewünschte Farbe der Trennplatte einzustellen. Auch ist es möglich, eine einfache Applikation von verschiedenen Oberflächen im Inlineprozess bei der Extrusion bzw. Koextrusion durchzuführen.

Mit einer solchen Applikationen können kostengünstig gewünschte Oberflächenfarben und Oberflächenstrukturen aufgebracht werden. Insbesondere ist es möglich, kostengünstig Echtmetalloberflächen mit dünnen Folien zum Beispiel von der Dicke im Bereich von 0,05 mm bis 0,2 mm, vorzugsweise mit der Dicke von 0,1 mm herzustellen bzw. aufzubringen.

Das Oberflächenelement kann auch aus einem anderen Material als Metall bestehen, wie z.B. aus Kunststoff oder auch aus einer Kombination mehrerer Materialen.

Das Aufbringen von Metallfolien oder sonstigen Folien und Schichten kann entweder in der Koextrusion erfolgen oder im Nachgang der Extrusion oder Koextrusion zum Beispiel mit einem Hotmelt-Kleber oder in einem Laminierungsprozess.

Das Aufbringen von Metallfolien oder sonstigen Oberflächen im Nachgang zur Herstellung des Extrusionsprofils bzw. Koextrusionsprofils bringt den Vorteil einer erhöhten Flexibilität mit sich, da aus ein und demselben Extrusions- bzw. Koextrusionswerkzeug sowohl das Profil ohne als auch mit Applikation produziert werden kann.

Wie oben ausgeführt, können die angebrachten Rastpofile bzw. sonstigen Befestigungselemente zum einen der Befestigung der Trennplatte im gekühlten Innenraum bzw. im Gehäuse des Gerätes dienen als auch zur Fixierung von Anbauteilen, wie zum Beispiel Isolationselementen, beispielsweise in Form von Styroporplatten.

Durch eine Bearbeitung des Extrusionsprofils bzw. Koextrusionsprofils nach dem Extrusions- bzw. Koextrusionsvorgang können auf einfache Art und Weise zum Beispiel Luftauslässe zum Steuern von Luftströmungen eingebracht werden oder Konturen für Anbauteile, wie zum Beispiel Ventilatoren, Luftverteiler oder auch eine horizontale Trennplatte.

Wie oben ausgeführt, ist ein ganz erheblicher Vorteil beim Extrusions- bzw. Koextrusionsverfahren nicht nur der verringerte Kostenaufwand, sondern auch der, dass beliebige Längenvarianten des Profils durch Ablängen produziert werden können und somit Trennplatten für verschiedenste Gerätehöhen produziert werden können.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Ferner wird darauf hingewiesen, dass die Begriffe "Extrusion" und "Koextrusion" im Rahmen der vorliegenden Offenbarung auch ausgetauscht werden können, d.h. sich auf die Extrusion beziehende Merkmale gelten auch für eine Koextrusion und umgekehrt.

Weiterhin können alle hierin beschriebenen Merkmale der Erfindung beliebig miteinander kombiniert oder voneinander isoliert beansprucht werden. Insbesondere können alle Verfahrensmerkmale auch Gegenstand des beanspruchten Gerätes sein und umgekehrt.

Weitere Einzelheiten und Vorteile der Erfindung werden anhand eines in der Zeichnung dargestellten Ausführungsbeispiels näher erläutert.

Es zeigen:
- Figur 1:: eine perspektivische Ansicht einer Trennplatte mit zwei angeschweißten Befestigungsprofilen, die ebenfalls in einen Extrusionsverfahren gefertigt wurden,
- Figur 2:: eine perspektivische Ansicht einer Trennplatte mit integrierter Befestigungskontur und zusätzlich eingebrachten Ausstattungen,
- Figur 3:: eine perspektivische Ansicht des Innenbehälters mit extrudierte Trennwand vor der Rückwand des Innenbehälters,
- Figur 4:: eine vergrößerte Ansicht des oberen Eckbereiches des Innenbehälters mit Trennplatte und Befestigungselement gemäß Figur 3 und
- Figur 5:: eine perspektivische Ansicht eines Seitenbereiches der extrudierten Trennplatte mit Befestigungselement und frontseitig applizierter Metallfolie.

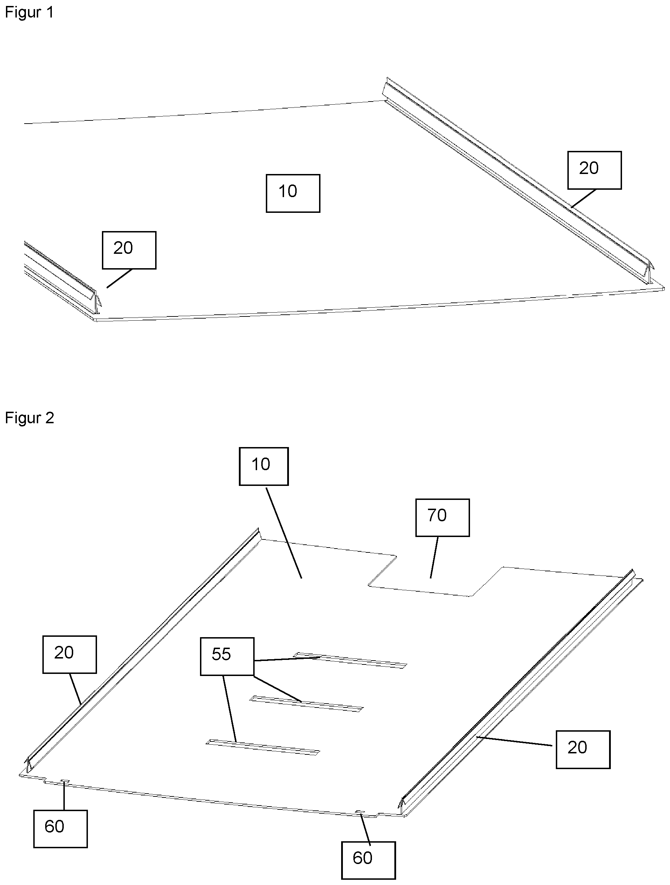

Figur 1 zeigt in einer perspektivischen Ansicht eine durch ein Extrusionsverfahren hergestellte Trennplatte 10 eines erfindungsgemäßen Kühl- und/oder Gefriergerätes.

Die Trennplatte 10 weist auf ihrer hier oben dargestellten Rückseite in beiden Seitenbereichen Befestigungsprofile 20 auf. Diese Befestigungsprofile 20 wurden ebenfalls im Extrusionsverfahren hergestellt. Sie erstrecken sich über die gesamte Länge der Trennplatte 10.

Von der Erfindung ist auch umfasst, dass sich die Befestigungsprofile 20 nur über eine Teillänge der Trennplatte 10 erstrecken und/oder dass pro Seite der Platte 10 mehrere Befestigungsprofile 20 vorhanden sind.

Wie dies aus Figur 1 hervorgeht, weisen beide Befestigungsprofile 20 einen sich vertikal von der Platte 10 erhebenden Steg 30 auf, von dem sich zwei Befestigungsstege 40, 50 erstrecken. Diese verlaufen im spitzen Winkel zu dem vertikalen Steg 30 und erstrecken sich von diesen auf unterschiedlichen Höhen.

Grundsätzlich ist es ebenso denkbar, die in Figur 1 dargestellten Befestigungsprofile 20 im selben Extrusionsvorgang herzustellen, wie die Trennplatte 10 selbst.

Figur 2 zeigt eine weitere perspektivische Ansicht einer Trennplatte mit zwei seitlich angeordneten Befestigungsprofilen 20. Wie auch in Figur 1 können diese nachträglich an der Platte 10 angebracht sein oder - wie in Figur 2 dargestellt - gleich mit der Platte 10 mitextrudiert sein.

Abgesehen davon entspricht die Struktur der Befestigungselemente 20 gemäß Figur 2 denen gemäß Figur 1.

Aus Figur 2 geht weiter hervor, dass in der Platte 10 selbst Ausstanzungen bzw. anderweitig hergestellte Auslegungen und Öffnungen vorgesehen sein können.

Diese können beispielsweise dazu dienen, Kaltluft, die in dem weiteren Bereich, d. h. in dem von den Nutzraum abgewandten Bereich entlang strömt an unterschiedlichen Positionen in den gekühlten Innenraum einzuführen. Diese Öffnungen sind in Figur 2 mit dem Bezugszeichen 55 gekennzeichnet. Die beiden unten dargestellten Öffnungen 60 dienen zur Aufnahme bzw. Fixierung einer horizontalen Trennplatte oder eines sonstigen funktionalen Elementes.

Mit dem Bezugszeichen 70 ist schließlich eine oben an der Trennplatte 10 angeordnete Ausstanzung vorgesehen, die als Aufnahme für einen Ventilator dient.

Auch sind grundsätzlich Ausstanzungen bzw. sonstige Öffnungen für andere Funktionen denkbar, wie zum Beispiel für Beleuchtungselemente.

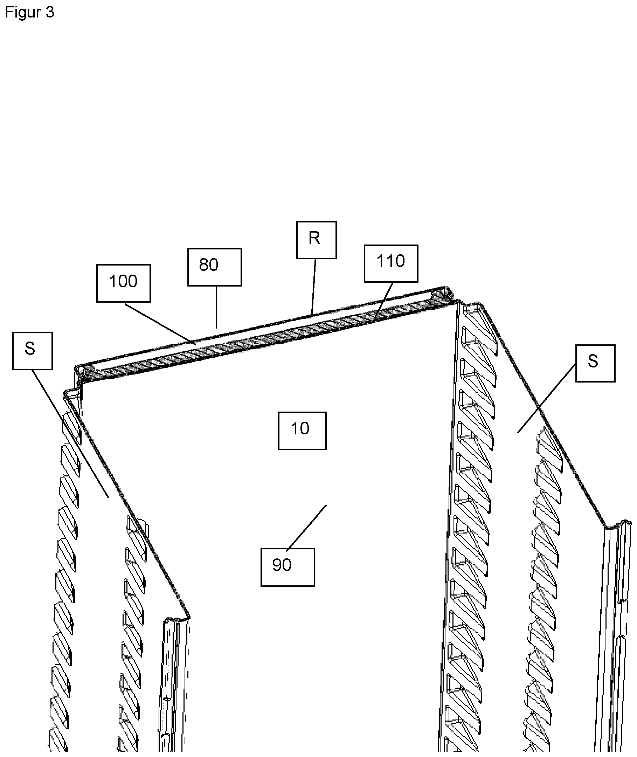

In Figur 3 ist der obere Bereich eines Innenbehälters 80 eines Kühl- und/oder Gefriergerätes gemäß der vorliegenden Erfindung gezeigt.

Der Innenbehälter 80 weist zwei gegenüberliegende Seitenwände S auf, die jeweils mit Rippen versehen sind, die zur Aufnahme bzw. Ablage von Ablageböden, Schubladen usw. dienen. Das Bezugszeichen R kennzeichnet die Rückwand des Innenbehälters 80.

Dieser vorgelagert ist die als Extrusionsprofil hergestellte Platte 10. Die Platte 10 unterteilt somit den von dem Innenbehälter 80 begrenzten Raum in einen vor der Platte 10 befindlichen Nutzraum 90, in dem Kühlgut bzw. Gefriergut abgelegt werden kann, und in einen hinter der Platte 10 befindlichen weiteren Bereich 100.

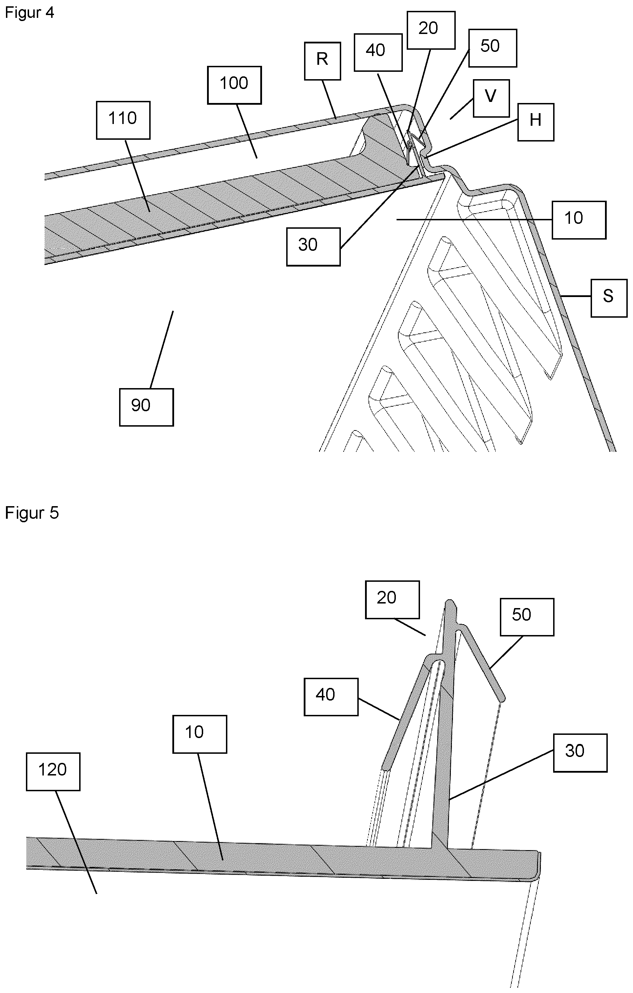

Aus Figur 4 geht das Detail der oberen hinteren Ecke gemäß Figur 3 näher hervor.

Mit dem Bezugszeichen 10 ist wieder die vertikale Trennplatte, die als Extrusionsprofil hergestellt ist, gekennzeichnet.

Diese weist auf ihrer Rückseite, d. h. auf der zu dem weiteren Bereich 100 gewandten Seite das Befestigungsprofil 20 auf.

In dem weiteren Bereich 100 befindet sich darüber hinaus ein Isolationsformteil 110, dass sich zwischen der Trennplatte 10 und der Rückwand R das Innenbehälters 80 befindet.

Die Trennplatte 10 wird so gehalten, dass der Steg 50 sich an einem Hinterschnitt H abstützt. Der Hinterschnitt H befindet sich in einem Bereich des Innenbehälters, der durch einen nach innen gerichteten Versatz V der Seitenwand S ausgeformt ist, wie dies aus Figur 4 hervorgeht.

Der weitere Steg 40 stützt sich an einem Hinterschnitt des Isolationsformteils 110 ab.

Auf diese Weise kann die vertikale Trennplatte 10 einfach von vorne eingeschoben werden, bis die beiden Stege 40, 50 einrasten, wobei der Steg 50 zuverlässig die Trennplatte 10 am Innenbehälter 80 und der Steg 40 zuverlässig das Isolationsformteil 110 an der Trennplatte 10 abstützen.

Vorzugsweise sind die beiden Stege 40, 50 federnd ausgeführt, sodass sie beim Einführen zusammengedrückt werden und in ihrer in Figur 4 dargestellten Endposition von alleine nach außen gedrückt werden, sodass sie mit den Hinterschnitten zusammenwirken, wie dies in Figur 4 gezeigt ist.

Aus Figur 5 geht das Befestigungselement 20 im Detail hervor. Deutlich erkennbar ist der sich vertikal nach hinten von der Platte 10 erstreckende Steg 30 sowie die beiden von diesem sich im spitzen Winkel erstreckenden Stege 40, 50.

Wie dies weiter aus Figur 5 hervorgeht, ist das Befestigungselement 20 in dem hier gezeigten Fall nicht nachträglich angebracht, sondern einteilig in einem gemeinsamen Extrusionsvorgang mit der Platte 10 bzw. mit dem Plattenggrundkörper hergestellt.

Aus Figur 5 ist weiter eine auf der Frontseite, d. h. zum Nutzraum gewandten Seite der Platte 10 zum Beispiel durch Verkleben applizierte Echtmetallfolie 120 erkennbar. Die Folie kann eine Dicke von weniger als 1 mm, vorzugsweise weniger als 0,5 mm und vorzugsweise weniger als 0,25 mm aufweisen.

Anstelle einer Folie kann beispielsweise auch eine Echtmetallplatte verwendet werden.

Die Befestigungselemente 20 können sich auch an anderer Stelle der Trennplatte von dieser erstrecken. Grundsätzlich sind auch andere Befestigungsarten denkbar, als die in Figur 5 gezeigte.

Somit sind auch andere Profile und Rastgeometrien denkbar.

Anstelle einer Verrastung kommt auch eine andere Befestigungstechnik der Trennplatte 10 infrage, wie beispielsweise ein Verschrauben oder Verklemmen der Trennplatte 10.

## Patentansprüche

1. Kühl- und/oder Gefriergerät mit einem gekühlten Innenraum, der einen Nutzraum zur Lagerung von Kühl- und/oder Gefriergut aufweist, sowie mit einer in dem gekühlten Innenraum befindlichen Trennplatte, die derart angeordnet ist, dass die Trennplatte den Nutzraum von einem weiteren Bereich des gekühlten Innenraums abgrenzt, der vorzugsweise keinen Nutzraum darstellt,
**dadurch gekennzeichnet,**
**dass** die Trennplatte teilweise oder vollständig durch ein extrudiertes oder durch ein koextrudiertes Element gebildet wird.

2. Kühl- und/oder Gefriergerät nach Anspruch 1, **dadurch gekennzeichnet, dass** die Trennplatte vertikal oder schräg angeordnet ist.

3. Kühl- und/oder Gefriergerät nach Anspruch 1 oder 2, **dadurch gekennzeichnet, dass** der gekühlte Innenraum durch einen Innenbehälter und durch die Innenseite eines Verschlusselementes, insbesondere einer Tür, begrenzt wird, wobei der Innenbehälter eine Rückwand aufweist und wobei die Trennplatte der Rückwand vorgelagert ist.

4. Kühl- und/oder Gefriergerät nach einem der vorhergehenden Ansprüche, **dadurch gekennzeichnet, dass** der weitere Bereich einen Luftkanal darstellt oder aufweist.

5. Kühl- und/oder Gefriergerät nach einem der vorhergehenden Ansprüche, **dadurch gekennzeichnet, dass** das Gerät einen Kältemittelkreislauf aufweist, der einen Verdampfer umfasst, und dass der Verdampfer in dem weiteren Bereich angeordnet ist.

6. Kühl- und/oder Gefriergerät nach einem der vorhergehenden Ansprüche, **dadurch gekennzeichnet, dass** das Gerät einen in dem weiteren Bereich angeordneten Ventilator aufweist.

7. Kühl- und/oder Gefriergerät nach einem der vorhergehenden Ansprüche, **dadurch gekennzeichnet, dass** an der Trennplatte ein oder mehrere Befestigungselemente angeordnet sind und/oder dass in der Trennplatte eine oder mehrere Ausnehmungen vorhanden sind, die vorzugsweise als Ausstanzungen ausgebildet sind.

8. Kühl- und/oder Gefriergerät nach Anspruch 7, **dadurch gekennzeichnet, dass** die Befestigungselemente einteilig mit der Trennplatte extrudierte Elemente sind oder als separat zu der Trennplatte gefertigte, insbesondere extrudierte, Bauteile ausgebildet sind oder dass die Befestigungselemente durch eine Verbindungstechnik, insbesondere durch Schweißen, wie Vibrationsschweißen oder Ultraschallschweißen, oder Kleben mit der Trennplatte verbunden sind.

9. Kühl- und/oder Gefriergerät nach einem der vorhergehenden Ansprüche, **dadurch gekennzeichnet, dass** die Trennplatte ohne ein Oberflächenelement und/oder ohne eine nach dem Extrusionsprozess erfolgende Nachbehandlung ausgebildet ist, insbesondere keine Beschichtung aufweist, oder mit einem Oberflächenelement versehen ist, das mit der Trennplatte koextrudiert ist oder als anderweitig mit der Trennplatte verbundenes Element, insbesondere auflaminiertes Element vorliegt.

10. Kühl- und/oder Gefriergerät nach Anspruch 9, **dadurch gekennzeichnet, dass** das Oberflächenelement eine Oberflächenstruktur aufweist, vorzugsweise eine Oberflächenstruktur in Form eines Schliffbildes.

11. Kühl- und/oder Gefriergerät nach einem der vorhergehenden Ansprüche, **dadurch gekennzeichnet, dass** die Trennplatte einen oder mehrere Farbstoffe und/oder Partikel, insbesondere Metallpartikel oder ein metallisches Erscheinungsbild erzeugende Partikel und/oder organische Partikel und/oder Holz imitierende Partikel aufweist, wobei sich diese Partikel vorzugsweise in einer eingefärbten oder transparenten bzw. transluzenten Schicht der Trennplatte befinden.

12. Kühl- und/oder Gefriergerät nach einem der Ansprüche 9 bis 11, **dadurch gekennzeichnet, dass** es sich bei dem Oberflächenelement um eine Folie oder eine Lackierung oder um eine gerade oder um eine gekrümmte Platte handelt.

13. Kühl- und/oder Gefriergerät nach Anspruch 12, **dadurch gekennzeichnet, dass** die Folie, Lackierung oder Platte der Kontur der Trennplatte wenigstens auf der zum Nutzraum gewandten Seite der Trennplatte folgt.

14. Kühl- und/oder Gefriergerät nach einem der Ansprüche 9 bis 13, **dadurch gekennzeichnet, dass** es sich bei dem Oberflächenelement um ein Element handelt, das aus Metall oder Kunststoff besteht oder Metall oder Kunststoff aufweist.

15. Kühl- und/oder Gefriergerät nach einem der vorhergehenden Ansprüche, **dadurch gekennzeichnet, dass** die Trennplatte ein oder mehrere Befestigungselemente zur Befestigung der Trennplatte aufweist.

16. Kühl- und/oder Gefriergerät nach Anspruch 15, **dadurch gekennzeichnet, dass** die Befestigungselemente als mit der Trennplatte extrudierte Elemente oder als anderweitig an der Trennplatte fixiertes Teil angeordnet sind.

17. Kühl- und/oder Gefriergerät nach Anspruch 15 oder 16, **dadurch gekennzeichnet, dass** die Befestigungselemente als Rastelemente und/oder als Widerhaken ausgebildet sind und/oder dass die Befestigungselemente an der zu dem weiteren Bereich gerichteten Seite der Trennplatte angeordnet sind.

18. Kühl- und/oder Gefriergerät nach einem der Ansprüche 15 bis 17, **dadurch gekennzeichnet, dass** die Befestigungselemente eine formschlüssige Verbindung mit dem den gekühlten Innenraum begrenzenden Innenbehälter und/oder einem in diesem befindlichen Element ausbilden.

19. Kühl- und/oder Gefriergerät nach einem der Ansprüche 15 bis 18, **dadurch gekennzeichnet, dass** sich in dem weiteren Bereich ein Isolationselement befindet und dass die Befestigungselemente eine formschlüssige, kraftschlüssige oder stoffschlüssige Verbindung mit dem Isolationselement ausbilden.

20. Kühl- und/oder Gefriergerät nach einem der vorhergehenden Ansprüche, **dadurch gekennzeichnet, dass** die Trennplatte ein- oder mehrteilig ist und im Falle der mehrteiligen Ausführung Verbindungsmittel aufweist, die die mehreren Teile der Trennplatte verbinden, wobei die Verbindungsmittel vorzugsweise auf der zu dem weiteren Bereich gewandten Seite der Trennplatte angeordnet sind.

21. Kühl- und/oder Gefriergerät nach einem der vorhergehenden Ansprüche, **dadurch gekennzeichnet, dass** die Trennplatte teilweise oder vollständig durch Tiefziehen des extrudierten Elementes gebildet ist.

22. Kühl- und/oder Gefriergerät nach einem der Ansprüche 19 bis 21, **dadurch gekennzeichnet, dass** die Trennplatte, das Isolationselement und ggf. ein oder mehrere funktionale Elemente eine gemeinsame Baugruppe bilden.

23. Verfahren zur Herstellung eines Kühl- und/oder Gefriergerätes nach einem der vorhergehenden Ansprüche, **dadurch gekennzeichnet, dass** die Trennplatte extrudiert oder koextrudiert wird, wobei vorzugsweise vorgesehen ist, dass Extrusionsprofil oder Koextrusionsprofil abgelängt wird, wenn die gewünschte Länge bzw. Höhe der Trennplatte erreicht ist.

24. Verfahren nach Anspruch 23, **dadurch gekennzeichnet, dass** die Trennplatte nach dem Extrusions- oder Koextrusionsprozess bereichsweise oder insgesamt einem Tiefziehprozess unterzogen wird und/oder dass die Trennplatte nach dem Extrusions- oder Koextrusionsprozess einem Prägeprozess unterzogen wird, mit dem eine Oberflächenstruktur eingeprägt wird.

25. Verfahren nach Anspruch 23 oder 24, **dadurch gekennzeichnet, dass** die die Trennplatte, das Isolationselement und ggf. ein oder mehrere funktionale Elemente als eine gemeinsame Baugruppe in dem Gerät verbaut werden.
